# DEMANDE DE BREVET EUROPEEN

(11) **EP 4 350 197 A1**
(43) Date de publication de la demande: **10.04.2024**
(21) Numéro de dépôt: 23201607.1
(22) Date de dépôt: 04.10.2023
(51) Int. Cl.: F17C 1/00

(54) **ENVELOPPE DE CONTENTION DE GAZ PRESSURISÉ, RÉSERVOIR DE GAZ PRESSURISÉ ET PROCÉDÉ DE FABRICATION D'UNE ENVELOPPE DE CONTENTION DE GAZ PRESSURISÉ ASSOCIÉS**

(30) Priorité: 05.10.2022 FR 2210194
(71) Demandeur: Faurecia Systèmes d'Echappement, 92000 Nanterre (FR)
(72) Inventeur: BAVEREL, Christophe, 25400 AUDINCOURT (FR); HERNANDEZ, Dorian, 90100 JONCHEREY (FR); FARALDI, David, 25200 MONTBELIARD (FR); MORET, Marc, 44240 LA CHAPELLE SUR ERDRE (FR); BRANGER, Thomas, 85600 MONTAIGU (FR)
(74) Mandataire: Lavoix

(57) **Abrégé**

Cette enveloppe de contention de gaz pressurisé (12), comprend :
- une première partie (22), comprenant une première coque (26) comprenant un premier bord périphérique (32),
- une deuxième partie (24), comprenant une deuxième coque (30) comprenant un deuxième bord périphérique (36),
le premier bord périphérique (32) étant solidarisé au deuxième bord périphérique (36), la première coque (26) et la deuxième coque (30) délimitant entre elles un volume intérieur (41), la première partie (22) comprenant au moins un pilier (28) traversant le volume intérieur (41), venu de matière avec la première coque (26) et étant allongé entre une extrémité proximale (46), connectée à la première coque (26), et une extrémité distale (47), solidarisée à la deuxième partie (24), une section transversale du pilier (28) étant décroissante de son extrémité proximale (46) à son extrémité distale (47).

## Description

La présente invention concerne une enveloppe de contention de gaz pressurisé. L'invention concerne un réservoir de gaz pressurisé comprenant une telle enveloppe ainsi qu'un procédé de fabrication d'une telle enveloppe.

Dans le domaine des moyens de transports, et en particulier dans l'automobile, il peut s'avérer important de contenir du gaz pressurisé. Ceci s'avère d'autant plus vrai avec l'essor des véhicules munis de piles à combustible, pour lesquels du dihydrogène destiné à alimenter une pile à combustible doit être stocké dans le véhicule.

Il est connu d'utiliser des réservoirs cylindriques pour la contention de gaz pressurisé dans des véhicules. De tels réservoirs sont généralement dotés d'une enveloppe de contention cylindrique, disposée à l'intérieur d'un corps du réservoir, et visant à assurer la contention du gaz pressurisé dans le réservoir.

De telles enveloppes, et plus généralement de tels réservoirs, ne donnent toutefois pas entière satisfaction en raison de leur forme qui est parfois inadaptée à l'aménagement d'un véhicule.

Il a alors été proposé d'utiliser des réservoirs non cylindriques, et par exemple des réservoirs de forme prismatiques. De tels réservoirs présentent généralement la forme d'un prisme aplati permettant d'améliorer l'intégration du réservoir dans le véhicule.

De tels réservoirs ne donnent toutefois pas entière satisfaction. En effet, du fait de leur forme non cylindrique, la robustesse des réservoirs s'avère détériorée. Il a alors été nécessaire de renforcer localement les réservoirs pour améliorer leur robustesse, et d'adapter les enveloppes à de tels renforts. La fabrication de telles enveloppes s'avère toutefois complexe.

Ainsi, l'un des buts de l'invention est de proposer une enveloppe de contention de gaz permettant une intégration facilitée dans un véhicule tout en étant peu complexe à fabriquer et en permettant d'obtenir un réservoir robuste.

A cet effet, l'invention a pour objet une enveloppe de contention de gaz pressurisé, comprenant :
- une première partie, comprenant une première coque comprenant un premier bord périphérique,
- une deuxième partie, comprenant une deuxième coque comprenant un deuxième bord périphérique,
le premier bord périphérique étant solidarisé au deuxième bord périphérique, la première coque et la deuxième coque délimitant entre elles un volume intérieur, la première partie comprenant au moins un pilier traversant le volume intérieur, venu de matière avec la première coque et étant allongé entre une extrémité proximale, connectée à la première coque, et une extrémité distale, solidarisée à la deuxième partie, une section transversale du pilier étant décroissante de son extrémité proximale à son extrémité distale.

L'utilisation d'une première partie comprenant au moins un pilier permet d'obtenir une enveloppe apte à accueillir des éléments de renforts, permettant ainsi l'obtention d'un réservoir dont la robustesse est améliorée. La section transversale du pilier décroissante de son extrémité proximale à son extrémité distale est en outre particulièrement avantageuse pour la réalisation de la première partie par exemple par moulage, une telle géométrie facilitant le démoulage de la première partie suite à sa fabrication.

Suivant d'autres aspects avantageux de l'invention, l'enveloppe de contention comporte l'une ou plusieurs des caractéristiques suivantes, prise(s) isolément ou suivant toute combinaison techniquement possible :
- le pilier est creux, le pilier comprenant une paroi de pilier connectée à la première coque et délimitant une cavité de pilier ;
- la paroi pilier s'étend dans la continuité de la première coque, la première coque et le pilier délimitant une première ouverture débouchant sur la cavité de pilier, la deuxième coque et le pilier délimitant une deuxième ouverture opposée à la première ouverture relativement au pilier, la deuxième ouverture débouchant sur la cavité de pilier ;
- une épaisseur de la paroi de pilier est sensiblement égale à une épaisseur de la première coque ;
- le premier bord périphérique est solidarisé au deuxième bord périphérique selon un plan de jonction, le pilier traversant le plan de jonction ;
- la deuxième partie comprend au moins un siège d'accueil, porté par la deuxième coque, le pilier étant reçu dans le siège d'accueil et solidarisé à la deuxième partie par le siège d'accueil ;
- l'un des premier et deuxième bords périphériques s'étend autour de l'autre des premier et deuxième bords périphériques en une région de recouvrement ;
- l'une des première et deuxième parties est formée en un matériau configuré pour être transparent à un rayonnement laser, l'autre de la première et deuxième parties étant formée en un matériau configuré pour absorber le rayonnement laser, le premier bord périphérique et le deuxième bord périphérique et/ou le pilier et la deuxième partie étant solidarisés entre eux par soudage laser ;
- le premier bord périphérique et le deuxième bord périphérique et/ou le pilier et la deuxième partie sont solidarisés entre eux par soudage bord à bord, une feuille résistive étant disposée entre des bords adjacents soudés du premier bord périphérique et du deuxième bord périphérique et/ou du pilier et de la deuxième partie ;
- les bords adjacents soudés délimitent entre eux un plan de soudage bord à bord oblique, s'étendant obliquement relativement à une direction d'épaisseur du premier bord périphérique et du deuxième bord périphérique et/ou du pilier et de la deuxième partie soudés ;
- la deuxième partie comprend au moins un pilier traversant le volume intérieur, venu de matière avec la deuxième coque et étant allongé entre une extrémité proximale, connectée à la deuxième coque, et une extrémité distale, solidarisée à la première partie, une section transversale du pilier étant décroissante de son extrémité proximale à son extrémité distale ; et
- la première et la deuxième parties sont sensiblement de même forme.

L'invention concerne en outre un réservoir de gaz pressurisé comprenant une enveloppe telle que précitée, et un corps de réservoir disposé autour de l'enveloppe, une face interne du corps de réservoir étant apposée à une face externe de l'enveloppe.

L'invention concerne en outre un procédé de fabrication d'une enveloppe de contention d'un gaz pressurisé telle que précitée, comprenant les étapes suivantes :
- fourniture d'une première partie et d'une deuxième partie de l'enveloppe ;
- solidarisation du premier bord périphérique au deuxième bord périphérique et solidarisation du pilier de la première partie à la deuxième partie.

L'invention sera mieux comprise à la lecture de la description qui va suivre, donnée uniquement à titre d'exemple non limitatif et faite en se référant aux dessins sur lesquels :
[Fig 1] la figure 1 est une vue en perspective partielle d'un réservoir comprenant une enveloppe selon l'invention ;
[Fig 2] la figure 2 est une vue en coupe transversale du réservoir de la figure 1 selon un plan de coupe I-I ;
[Fig 3] la figure 3 est une vue en coupe transversale semblable à celle de la figure 2, dans laquelle le réservoir comprend une enveloppe selon une variante alternative à l'enveloppe du réservoir des figures 1 et 2 ;
[Fig 4] la figure 4 est une vue en perspective du réservoir des figures 1 et 2 dans son entièreté ; et
[Fig 5] la figure 5 est une vue en coupe selon le plan I-I d'un détail de la solidarisation entre deux partie d'une enveloppe selon un mode de réalisation alternatif aux variantes présentées sur les figures 1 à 4.

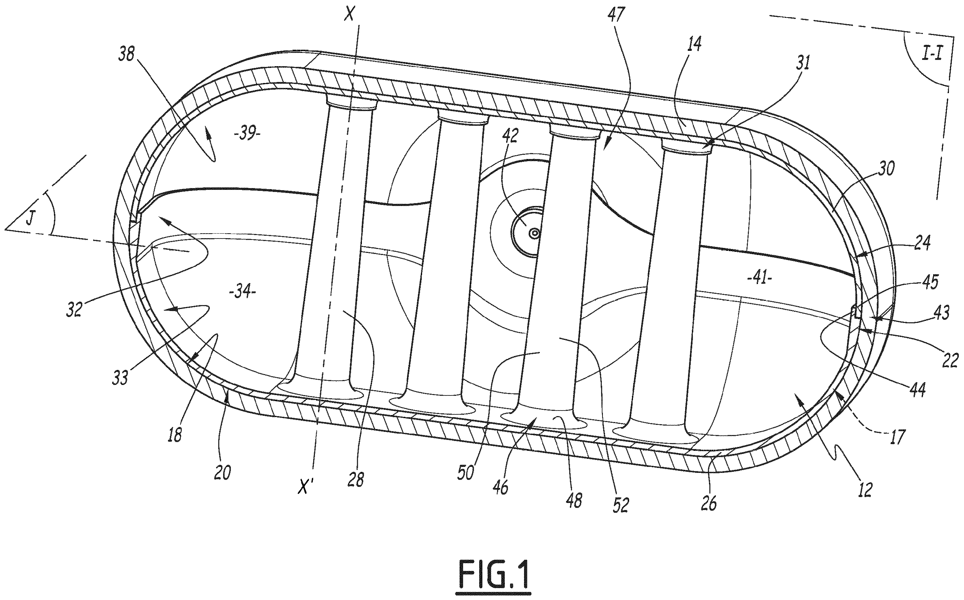

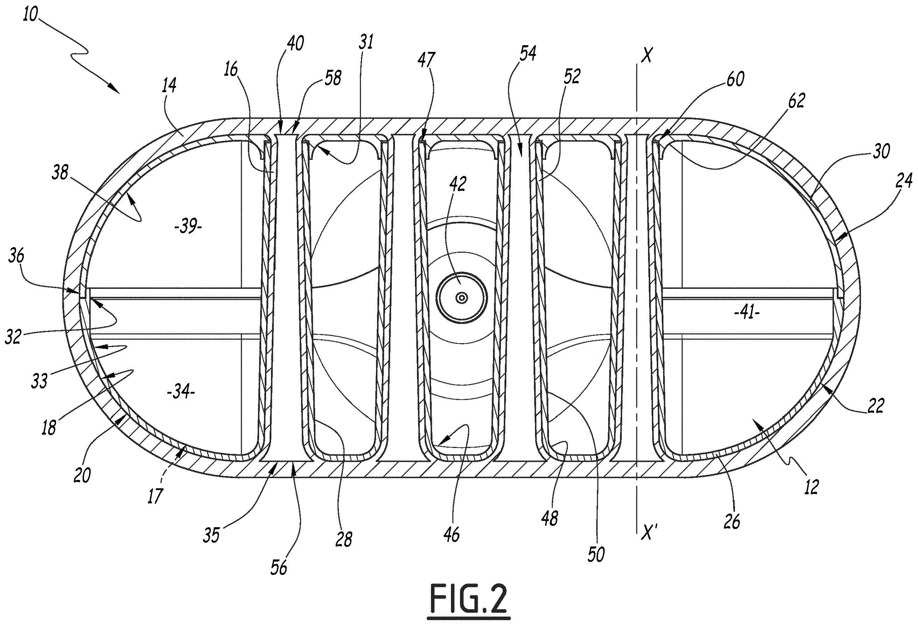

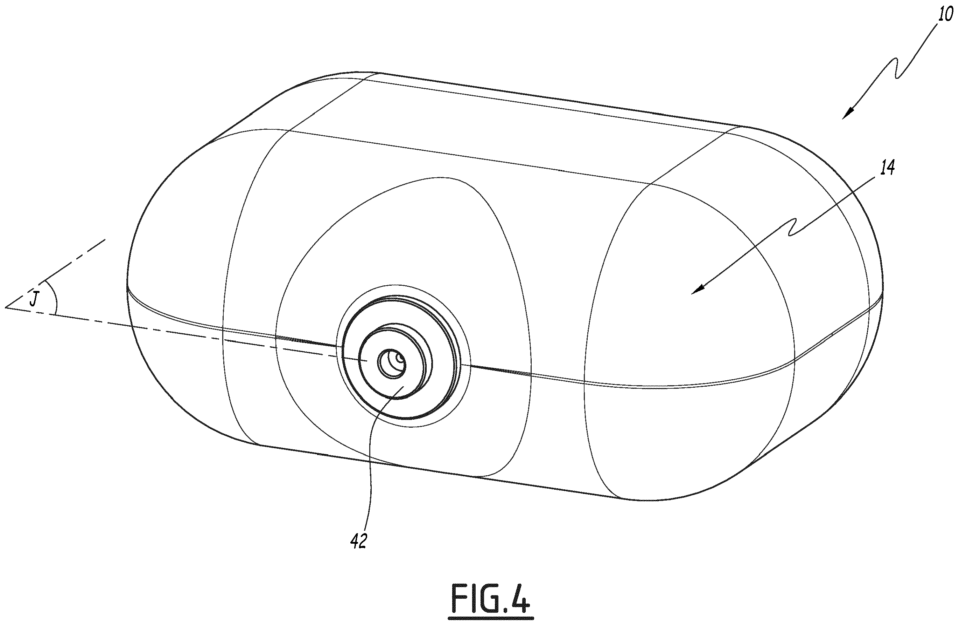

En référence aux figures 1 à 2 et 4, un réservoir de gaz pressurisé 10 comprend une enveloppe de contention de gaz pressurisé 12. Comme visible sur la figure 2, le réservoir 10 comprend en outre un corps de réservoir 14 ainsi qu'au moins une colonne de réservoir 16.

Le réservoir de gaz pressurisé 10 est configuré pour contenir un gaz pressurisé tel par exemple un gaz combustible réducteur et tel notamment de l'hydrogène pressurisé. Le réservoir de gaz pressurisé 10 est par exemple configuré pour contenir un gaz à une pression supérieure à 200 bar et par exemple un gaz à une pression de 350 bar ou un gaz à une pression de 700bar. Le réservoir de gaz pressurisé 10 est en outre par exemple configuré pour contenir un liquide, tel par exemple une phase liquide du gaz pressurisé contenu dans le réservoir 10.

Le réservoir de gaz pressurisé 10 est par exemple destiné à être installé dans un véhicule et par exemple un véhicule automobile. Le réservoir de gaz pressurisé 10 est par exemple configuré pour alimenter en combustible une pile à combustible du véhicule (non représentée).

Le corps de réservoir 14 forme par exemple un volume de corps 17 dans laquelle est logée l'enveloppe 12. Le corps de réservoir 14 comprend par exemple une face interne 18 définissant le volume de corps 17. Le corps de réservoir 14 est par exemple réalisé autour de l'enveloppe 12 de sorte à ce que l'enveloppe 12 soit disposée dans le corps de réservoir 14, la face interne 18 étant par exemple apposée à une face externe 20 de l'enveloppe.

Le corps de réservoir 14 est par exemple réalisé en composite. Le composite à partir duquel le corps de réservoir 14 est réalisé comprend par exemple une résine telle : une résine époxy, ou une résine réalisée à partir d'au moins un polymère thermoplastique choisi dans le groupe constitué par les polyoléfines, notamment le polypropylène, les polyamides, notamment les polyamides aliphatiques, tels que le polycaprolactame PA 6, le polyhexaméthylène adipamide PA 6.6, les polycarbonates, les PAEK (Polyaryléthercétone) dont font partie le PEEK (polyétheréthercétone) et le PEKK (polyéthercétonecétone), les matières sur base acrylique type PMMA (notamment la résine connue sous le nom d'ELIUM), les PEI (Polyétherimide également connu sous le nom d'ULTEM), le PPS (Polysulfure de phénylène), l'ABS (acrylonitrile butadiène styrène), le PLA (acide polylactique), le TPU (polyuréthane thermoplastique) et le PET (polyéthylène), et leurs mélanges.

Le composite à partir duquel le corps de réservoir 14 est réalisé comprend par exemple un renfort réalisé en : des fibres choisies dans le groupe constitué par les fibres de carbone, les fibres Kevlar, les fibres de verre, les fibres de céramique, les fibres de matériau polymère, par exemple thermoplastique, notamment les fibres d'aramide ou de polyester, les fibres d'origine végétale, notamment les fibres de lin, les fibres métalliques, les fibres étant de préférence des fibres de carbone, ou un mélange de telles fibres.

Comme visible sur la figure 2, chaque colonne de réservoir 16 s'étend dans le volume de corps 17 et connecte par exemple des portions de la face interne 18 du corps de réservoir 14 opposées l'une à l'autre relativement au volume de corps 17.

Chaque colonne de réservoir 16 est par exemple soudée au corps de réservoir 18 en chacune des extrémités de la colonne 16 et/ou réalisée de sorte à former un seul bloc avec le corps de réservoir 14.

Chaque colonne de réservoir 16 est par exemple réalisé en composite. Le composite à partir duquel chaque colonne de réservoir 16 est réalisée comprend par exemple une résine telle : une résine époxy, ou une résine réalisée à partir d'au moins un polymère thermoplastique choisi dans le groupe constitué par les polyoléfines, notamment le polypropylène, les polyamides, notamment les polyamides aliphatiques, tels que le polycaprolactame PA 6, le polyhexaméthylène adipamide PA 6.6, les polycarbonates, les PAEK (Polyaryléthercétone) dont font partie le PEEK (polyétheréthercétone) et le PEKK (polyéthercétonecétone), les matières sur base acrylique type PMMA (notamment la résine connue sous le nom d'ELIUM), les PEI (Polyétherimide également connu sous le nom d'ULTEM), le PPS (Polysulfure de phénylène), l'ABS (acrylonitrile butadiène styrène), le PLA (acide polylactique), le TPU (polyuréthane thermoplastique) et le PET (polyéthylène), et leurs mélanges.

Le composite à partir duquel chaque colonne de réservoir 16 est réalisé comprend par exemple un renfort réalisé en : des fibre choisies dans le groupe constitué par les fibres de carbone, les fibres Kevlar, les fibres de verre, les fibres de céramique, les fibres de matériau polymère, par exemple thermoplastique, notamment les fibres d'aramide ou de polyester, les fibres d'origine végétale, notamment les fibres de lin, les fibres métalliques, les fibres étant de préférence des fibres de carbone, ou un mélange de telles fibres.

Dans un mode de réalisation particulier, le matériau des colonnes de réservoir 16 est le même que le matériau du corps de réservoir 14.

Comme illustré sur la figure 2, chaque colonne de réservoir 16 est par exemple creuse.

Comme vu plus haut, l'enveloppe 12 est par exemple disposée dans le volume de corps 17.

L'enveloppe 12 est configurée pour assurer l'étanchéité du réservoir 10 au gaz pressurisé tandis que le corps de réservoir 14 est configuré pour assurer la résistance à la pression du gaz pressurisé.

Comme illustré sur la figure 2, l'enveloppe comprend une première partie 22 et une deuxième partie 24.

La première partie 22 et la deuxième partie 24 sont par exemple réalisées en un matériau thermoplastique choisi dans la liste consistant en ABS (Acrylonitrile butadiene styrène), PA (polyamide), PE (Polyethylene), PC (polycarbonate), PP (polypropène), PMMA (poly méthacrylate de méthyle acrylique), PS (Polystyrène Expansé), PBT (Polytéréphtalate de butylène). Le matériau de la première partie 22 et de la deuxième partie 24, est par exemple plus particulièrement choisi dans la liste consistant en : PA6 (Polycaprolactame), PA11 (polyundécanamide) ou PA12 (Nylon 12).

Comme cela sera décrit plus en détails par la suite, le matériau thermoplastique choisi pour former la première partie 22 ou la deuxième partie 24 peut par exemple comprendre un additif.

La première partie 22 comprend une première coque 26 et au moins un pilier 28. Comme illustré sur les figures 1 et 2, la première partie 22 comprend par exemple une pluralité de piliers 28 et par exemple au moins quatre piliers 28.

La deuxième partie 24 comprend une deuxième coque 30 et comprend par exemple un siège d'accueil 31. Comme illustré sur les figures 1 et 2, la deuxième partie 24 comprend par exemple une pluralité de sièges d'accueil 31 et par exemple autant de sièges d'accueil 31 que de piliers 28.

Comme illustré sur les figures 1 et 2, la première coque 26 comprend un premier bord périphérique 32 et une face intérieure 33. La première coque 26, et plus particulièrement la face intérieure 33, délimite un premier espace concave 34 ouvert selon le premier bord périphérique 32. Comme cela sera décrit plus en détails par la suite, la première coque 26 comprend par exemple un orifice 35 dans lequel est logé le pilier 28.

Comme illustré sur les figures 1 et 2, la deuxième coque 30 comprend un deuxième bord périphérique 36 et une face intérieure 38. La deuxième coque 30, et plus particulièrement la face intérieure 38, délimite un deuxième espace concave 39 ouvert selon le deuxième bord périphérique 36. Comme cela sera décrit plus en détails par la suite, la deuxième coque 30 comprend par exemple un orifice 40 dans lequel est logé le siège d'accueil 31.

La première partie 22 et la deuxième partie 24 sont disposées l'une en face de l'autre, le premier espace concave 34 et le deuxième espace concave 39 débouchant par exemple l'un en face de l'autre.

Le premier bord périphérique 32 est en particulier disposé en regard du deuxième bord périphérique 36 et le premier bord périphérique 32 est solidarisé au deuxième bord périphérique 36. La première coque 26 et la deuxième coque 30 ainsi solidarisées par le premier 30 et le deuxième 36 bords périphérique, délimitent entre elles un volume intérieur 41. Le volume intérieur 41 ainsi délimité est configuré pour être occupé par le gaz pressurisé.

Comme illustré sur les figures 1 à 4, au moins un port 42 du réservoir 10 est par exemple logé dans la première partie 22 pour permettre l'accès au volume intérieur 41, par exemple pour le remplissage et/ou le vidage du volume intérieur 41 en gaz pressurisé.

L'un des premier 32 et deuxième 36 bords périphériques s'étend par exemple autour de l'autre des premier 32 et deuxième 36 bords périphériques en une région de recouvrement 43.

En particulier, comme illustré sur la figure 2, le deuxième bord périphérique 36 s'étend par exemple autour du premier bord périphérique 32 et est apposé au premier bord périphérique 32 du côté opposé au volume intérieur 41. A cet effet, le premier bord périphérique 32 comprend une portion recouverte 44 et le deuxième bord périphérique 36 comprend une portion de recouvrement 45. Comme illustré sur la figure 2, la portion de recouverte 44 forme par exemple une languette débordant sur portion de recouvrement 45.

Comme illustré sur la figure 1, le premier bord périphérique 32 et le deuxième bord périphérique 36 sont solidarisés selon un plan de jonction J. On comprendra en particulier qu'au moins 50% du premier bord périphérique 32 et du deuxième bord périphérique 36 sont solidarisés selon le plan de jonction J. Comme illustré sur la figure 2, on comprendra en outre que le premier bord périphérique 32 et que le deuxième bord périphérique 36 sont par exemple solidarisés hors du plan de jonction, par exemple lorsque lesdits bords périphériques 32, 36 s'étendent au voisinage du port 42 et que les bords périphériques 32, 36 sont décalés du plan de jonction J.

L'au moins un pilier 28 traverse le volume intérieur 41. En particulier, l'au moins un pilier 28 traverse le volume intérieur 41 de sorte que le volume intérieur 41 s'étend autour du pilier 28, entre la première coque 26 et la deuxième coque 30.

Comme visible sur les figures 1 et 2, le pilier traverse en outre le plan de jonction J. Le pilier 28 est par exemple orthogonal au plan de jonction J.

Comme illustré sur les figures 1 et 2, le pilier 28 et la première coque 26 sont venus de matière. Le pilier 28 et la première coque 26 sont en d'autres termes formées en un seul bloc, l'au moins un pilier 28 et la première 26 coque formant la première partie 22 étant par exemple moulés en une seule pièce.

Le pilier 28 comprend une extrémité proximale 46 et une extrémité distale 47. Comme illustré selon les figures 1 et 2, le pilier 28 est allongé selon une direction d'élongation X-X' entre son extrémité proximale 46 et son extrémité distale 47.

Comme illustré sur les figures 1 et 2, l'extrémité proximale 46 est connectée à la première coque 26. L'extrémité distale 47 est solidarisée à la deuxième partie 24 et par exemple à la deuxième coque 26 et/ou au siège d'accueil 31.

Une section transversale du pilier 28 est décroissante de son extrémité proximale 46 à son extrémité distale 47, par exemple tout le long du pilier 28 selon sa direction d'élongation X-X'. Par section transversale du pilier 28, on comprend une section externe du pilier, définissant par exemple le volume intérieur 41, mesurée orthogonalement à la direction d'élongation X-X'.

Comme illustré sur la figure 1, le pilier comprend par exemple un col de pilier 48 et un corps de pilier 50, le col du pilier 48 connectant le corps du pilier à la première coque 26. En particulier, le col de pilier 50 connecte le pilier à la première coque 26 dans l'orifice 35 de la première coque 26.

Dans le mode de réalisation présenté sur les figures 1 et 2, la section transversale du pilier est sensiblement circulaire. Le corps de pilier 50 est alors par exemple de forme tronconique, la section du pilier 28 étant ainsi minimale en l'extrémité distale 47 du pilier 28.

Dans une variante non illustrée, la section transversale du pilier est sensiblement ellipsoïdale.

Comme illustré sur la figure 2, le pilier 28 est par exemple creux. Le pilier comprend alors une paroi de paroi de pilier 52, connectée à la première coque 26 et délimitant une cavité de pilier 54.

Comme illustré sur la figure 2, la paroi de pilier 52 forme par exemple le col de pilier 48 et le corps de pilier 50.

La paroi de pilier 52 s'étend par exemple dans la continuité de la première coque 26, c'est-à-dire par exemple que la paroi de pilier 52 et une paroi définissant la première coque 26 ne forment entre eux pas d'angles vifs. Une épaisseur de la paroi de pilier 52 est alors par exemple sensiblement égale à une épaisseur de la première coque 26.

Comme illustré sur la figure 2, la première coque 26 et le pilier 28 délimitent une première ouverture 56 débouchant sur la cavité de pilier 54. La première ouverture 56 s'étend en particulier à l'extrémité distale 47 du pilier 28, à la jonction entre le pilier 28 et la première coque 26.

Comme illustré sur la figure 2, la deuxième coque 30 et le pilier 28 délimitent par exemple une deuxième ouverture 58 débouchant sur la cavité de pilier 54, opposée à la première ouverture 56 relativement au pilier 28. A cet effet, le pilier 28 est ouvert en son extrémité distale 47 et la deuxième coque 30, ainsi que par exemple le siège d'accueil 31, sont par exemple ouvert en regard de l'extrémité distale 47 du pilier 28, pour former la deuxième ouverture 58.

Comme illustré sur la figure 2, une colonne de réservoir 16 est logée dans la cavité 54 de chaque pilier 28, la colonne de réservoir 16 débordant de la cavité 54 de part et d'autre de l'enveloppe 12 au travers de la première ouverture 56 et de la deuxième ouverture 58.

Comme visible sur la figure 2, le siège d'accueil 31 est porté par la deuxième coque 30. Le siège d'accueil 31 et la deuxième coque 30 sont par exemple venus de matière.

Le pilier est par exemple reçu dans le siège d'accueil 31 et solidarisé à la deuxième partie 24 par le siège d'accueil 31.

Comme vu plus haut, le siège d'accueil 31 est par exemple ouvert en regard de l'extrémité distale 47 pour former la deuxième ouverture 58.

Le siège d'accueil 31 comprend en outre une portion de butée 60 en une portion en saillie 62.

La portion de butée 60 est par exemple disposée en regard de l'extrémité distale 47 du pilier 28, le pilier 28 étant par exemple en butée sur la portion de butée 60 selon la direction d'élongation X-X'.

La portion en saille 62 fait saillie de la deuxième coque 30 vers la première partie 22 suivant la direction d'élongation X-X', la portion en saillie 62 étant disposée autour de l'extrémité distale 47.

Dans l'exemple illustré sur les figures 1 et 2, le première partie 22 est réalisée dans un matériau configuré pour absorber un rayonnement laser. La deuxième partie 24 est en outre réalisée dans un matériau configuré pour être transparent à un rayonnement laser.

Le matériau configuré pour être transparent à un rayonnement laser est par exemple réalisé dans l'un des matériaux thermoplastiques présentés plus haut, ledit matériau thermoplastique étant dépourvu d'additif d'absorption de lumière.

Le matériau configuré pour absorber un rayonnement laser est par exemple réalisé dans l'un des matériaux thermoplastiques présentés plus haut, ledit matériau thermoplastique comprenant un additif d'absorption de lumière tel par exemple du carbone.

Dans un mode de réalisation particulier, le matériau configuré pour être transparent à un rayonnement laser et le matériau configuré pour absorber un rayonnement laser sont réalisés à l'aide d'un même matériau thermoplastique, la différence entre ces matériaux étant que le matériau configuré pour absorber un rayonnement laser est traité à l'aide d'un additif d'absorption de lumière tandis que le matériau configuré pour être transparent à un rayonnement laser n'est pas traité à l'aide d'un tel additif.

Le premier bord périphérique 32 et le deuxième bord périphérique 36 et/ou le pilier 28 et la deuxième partie 24 sont solidarisés entre eux par soudage laser.

Dans l'exemple illustré sur la figure 2, la portion recouverte 44 et la portion de recouvrement 45 sont alors solidarisées par soudage laser, solidarisant le premier bord périphérique 32 et le deuxième bord périphérique 36. Dans cet exemple, l'extrémité distale 47 du pilier 28 est en outre solidarisée au siège d'accueil 31, en en particulier à la portion de butée 60, par soudage laser, solidarisant le pilier 28 et la deuxième partie 24.

Une variante de l'enveloppe 12 décrite plus haut va maintenant être présentée. Selon cette variante, l'enveloppe 12 diffère de la variante précédemment présenté par ce qui suit. Les éléments analogues portent les mêmes références.

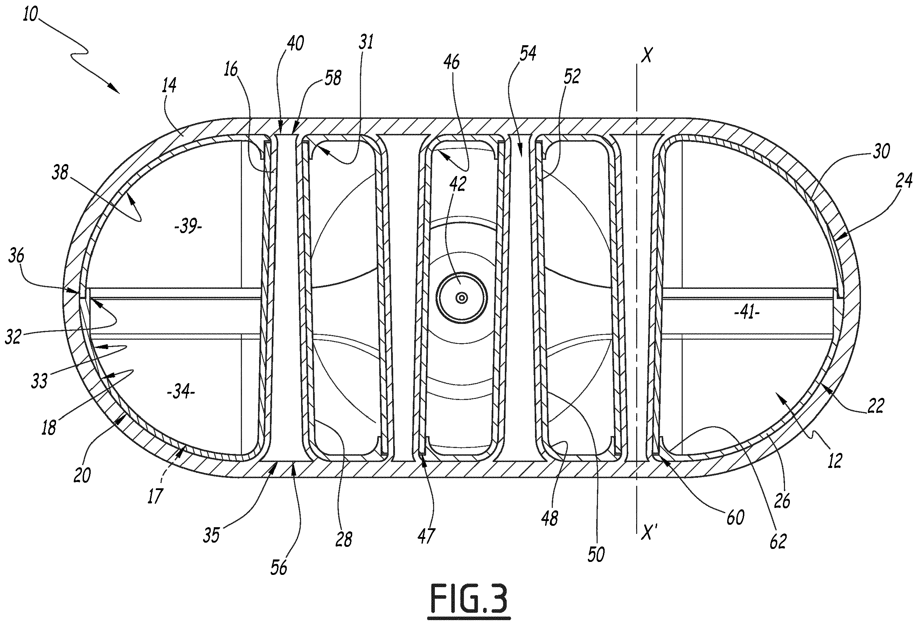

Dans cette variante, illustrée en figure 3, la deuxième partie 24 comprend elle aussi au moins un pilier 28 traversant le volume intérieur 41.

Comme illustré sur la figure 3, et de façon analogue à l'au moins un pilier 28 de la première partie 22, l'au moins un pilier 28 de la deuxième partie 24 est venu de matière avec la deuxième coque 30 et est allongé entre une extrémité proximale 46 de ce pilier 28 et une extrémité distale 47 de ce pilier 28.

L'extrémité proximale 46 du ou de chaque pilier 28 de la deuxième partie 24 est connectée à la deuxième coque 30 et l'extrémité distale 47 du ou de chaque pilier 28 est solidarisée à la première partie 22.

Comme illustré sur la figure 3, et de façon analogue à l'au moins un pilier 28 de la première partie 22, la section transversale du pilier 28 de la deuxième partie 24 est décroissante de son extrémité proximale 46 à son extrémité distale 47.

La première partie 22 comprend en outre par exemple selon cette variante au moins un siège d'accueil 31 analogue aux sièges d'accueil 31 de la deuxième partie précédemment présentée. Le pilier 28 de la deuxième partie 24 est alors reçu dans le siège d'accueil 31 de la première partie 22 et est solidarisé à la première partie par ledit siège d'accueil 31. En d'autres termes les piliers 28 de la deuxième partie 24 coopèrent avec les sièges d'accueil 31 de la première partie 22 et les piliers 28 de la première partie 22 coopèrent avec les sièges d'accueil 31 de la deuxième partie 24.

Dans cette variante, et comme illustré sur la figure 3, la première 22 et la deuxième 24 parties sont par exemple sensiblement de même forme. En particulier la première 22 et la deuxième 24 partie comprennent un même nombre de piliers 28 disposés en des mêmes régions de la première 26 et de la deuxième 30 coques. La première 22 et la deuxième partie 24 comprennent en outre par exemple un même nombre de sièges d'accueil 31 disposés en des mêmes régions de la première 26 et de la deuxième 30 coques.

Comme illustré sur la figure 3, des piliers 28 adjacents de l'enveloppe 12 sont par exemple en alternance des piliers de la première partie 22 et de la deuxième partie 24, par exemple de sorte à ce que la deuxième partie 24 soit de forme analogue à la première partie 22 et soit retournée sur la première partie 22 pour former l'enveloppe.

Un deuxième mode de réalisation d'une enveloppe 12 de contention de gaz pressurisé, alternatif aux variantes du mode de réalisation précédemment présenté, va maintenant être présenté. Selon ce deuxième mode de réalisation, l'enveloppe 12 diffère du mode de réalisation précédemment présenté par ce qui suit. Les éléments analogues portent les mêmes références.

Dans ce mode de réalisation, le premier bord périphérique 32 et le deuxième bord périphérique 36 et/ou le pilier 28 et la deuxième partie 24 ne sont pas solidarisés entre eux par soudage laser mais sont solidarisés entre eux par soudage bord à bord.

A cet effet, la première partie 22 n'est pas nécessairement réalisée en un matériau absorbant un rayonnement laser et la deuxième partie 24 n'est pas nécessairement réalisée en un matériau transparent à un rayonnement laser.

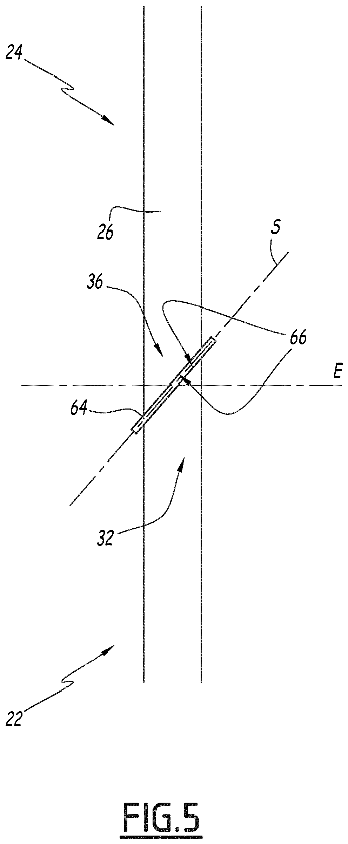

Dans ce mode de réalisation, et comme illustré en figure 5, au moins une feuille résistive 64 est disposée entre des bords adjacents 66 de la première partie 22 et de la deuxième partie 24.

Comme représenté sur la figure 5, une feuille résistive 64 est par exemple disposée entre des bords adjacents 66 soudés du premier bord périphérique 32 et du deuxième bord périphérique 36. En variante, ou en complément, une feuille résistive est disposée entre des bords adjacents du pilier 28 et de la deuxième partie 24, et par exemple entre l'extrémité distale 47 du pilier 28 et la portion de butée 60 du siège d'accueil 31.

Dans l'exemple de la figure 5, les bords adjacentes 66 délimitent entre eux un plan de soudage bord à bord S. Le plan de soudage bord à bord S est par exemple oblique relativement à une direction d'épaisseur E du premier bord périphérique 32 et du deuxième bord périphérique 36 et/ou du pilier 28 et de la deuxième partie 24 soudés.

Dans la figure 5 où sont représentés le premier bord périphérique 32 et le deuxième bord périphérique 36 soudés bord à bord, la direction d'épaisseur est sensiblement perpendiculaire aux faces intérieures 33, 38. Le plan de soudage n'est ainsi pas parallèle à la direction d'épaisseur E. Le plan de soudage forme par exemple un angle compris entre 0° et 80° par rapport à la direction d'épaisseur E et notamment entre 30° et 60°.

Un troisième mode de réalisation d'une enveloppe 12 de contention de gaz pressurisé va maintenant être présenté. Selon ce troisième mode de réalisation, l'enveloppe 12 diffère des modes de réalisation précédemment présentés par ce qui suit. Les éléments analogues portent les mêmes références.

Dans ce troisième mode de réalisation, la première partie 22 et la deuxième partie 24 ne sont ni solidarisées par soudage laser, ni par soudage bord à bord, mais sont solidarisées par soudage à gaz chaud.

A cet effet, la première partie 22 n'est pas nécessairement réalisée en un matériau absorbant un rayonnement laser et la deuxième partie 24 n'est pas nécessairement réalisée en un matériau transparent à un rayonnement laser. Aucune feuille résistive 64 n'est en outre utilisée pour la solidarisation de la première partie 22 et de la deuxième partie 24. Des bords adjacents et/ou superposés de la première partie 22 et de la première partie 24 sont, dans ce mode de réalisation, soudés par le chauffage local de ces bords à l'aide d'un gaz chaud tel de l'air chaud.

Un procédé de fabrication d'une enveloppe 12 de contention de gaz pressurisé telle que décrite plus haut va maintenant être présenté.

Lors d'une première étape, la première partie 22 et la deuxième partie 24 sont fournies.

Lors d'une deuxième étape, le premier bord périphérique 32 est solidarisé au deuxième bord périphérique 36 et le pilier 28 est solidarisé à la deuxième partie 24.

Selon le premier mode de réalisation présenté plus haut, le premier bord périphérique 32 et le deuxième bord périphérique 36 ainsi que le pilier 28 et la deuxième partie 24 sont solidarisés par soudage laser.

A cet effet, un faisceau laser est pointé sur le premier bord périphérique 32, absorbant le rayon laser, au travers du deuxième bord périphérique 36, transparent au rayon laser. Le chauffage local du premier bord périphérique 32 associé à l'absorption du rayon laser provoque une fusion locale du premier bord périphérique 32 ainsi qu'une fusion locale du deuxième bord périphérique 36 lui étant adjacent, résultant en la solidarisation par soudure laser du premier 32 et du deuxième 36 bords périphériques.

De manière analogue, un faisceau laser est pointé sur le pilier 28 au travers de la deuxième partie 24 pour la solidarisation par soudure laser du pilier 28 et de la deuxième partie 24.

Selon le deuxième mode de réalisation présenté plus haut, la solidarisation du premier bord périphérique 32 au deuxième bord périphérique 36 et la solidarisation du pilier 28 à la deuxième partie 24 est effectuée par soudage bord à bord.

La feuille résistive 64 est disposée entre les bords adjacents 66 de la première partie 22 et de la deuxième partie 24. Un courant est alors généré au travers de la feuille résistive 64 pour son chauffage par effet Joule. Les bords adjacents 66 sont ainsi chauffés, résultant en une soudure des bords adjacents 66 à la feuille résistive 64.

Selon le troisième mode de réalisation présenté plus haut, la solidarisation du premier bord périphérique 32 au deuxième bord périphérique 36 et la solidarisation du pilier 28 à la deuxième partie 24 est effectuée par soudage à gaz chaud

Le chauffage de parties adjacentes pour leur fusion locale et pour la soudure qui en résulte est alors réalisé par l'intermédiaire d'un jet de gaz chaud.

On comprendra que les différents modes de soudure présentés dans les trois modes de réalisation plus haut peuvent être combinés et sont par exemple interchangeables. Par exemple, le premier bord périphérique 32 est soudé au deuxième bord périphérique 36 par soudage bord à bord et le pilier 28 est soudé à la deuxième partie 24 par soudage laser.

## Revendications

1. Enveloppe de contention de gaz pressurisé (12), comprenant :
- une première partie (22), comprenant une première coque (26) comprenant un premier bord périphérique (32),
- une deuxième partie (24), comprenant une deuxième coque (30) comprenant un deuxième bord périphérique (36),
le premier bord périphérique (32) étant solidarisé au deuxième bord périphérique (36), la première coque (26) et la deuxième coque (30) délimitant entre elles un volume intérieur (41), la première partie (22) comprenant au moins un pilier (28) traversant le volume intérieur (41), venu de matière avec la première coque (26) et étant allongé entre une extrémité proximale (46), connectée à la première coque (26), et une extrémité distale (47), solidarisée à la deuxième partie (24), une section transversale du pilier (28) étant décroissante de son extrémité proximale (46) à son extrémité distale (47).

2. Enveloppe (12) selon la revendication 1, dans laquelle le pilier (28) est creux, le pilier (28) comprenant une paroi de pilier (52) connectée à la première coque (26) et délimitant une cavité de pilier (54).

3. Enveloppe (12) selon la revendication 2, dans laquelle la paroi pilier (52) s'étend dans la continuité de la première coque (26), la première coque (26) et le pilier (54) délimitant une première ouverture (56) débouchant sur la cavité de pilier (54), la deuxième coque (30) et le pilier (28) délimitant une deuxième ouverture (58) opposée à la première ouverture (56) relativement au pilier (54), la deuxième ouverture (58) débouchant sur la cavité de pilier (54).

4. Enveloppe (12) selon la revendication 2 ou 3, dans laquelle une épaisseur de la paroi de pilier (52) est sensiblement égale à une épaisseur de la première coque (26).

5. Enveloppe (12) selon l'une quelconque des revendications précédentes, dans laquelle le premier bord périphérique (32) est solidarisé au deuxième bord périphérique (36) selon un plan de jonction (J), le pilier (28) traversant le plan de jonction (J).

6. Enveloppe (12) selon l'une quelconque des revendications précédentes, dans laquelle la deuxième partie (24) comprend au moins un siège d'accueil (31), porté par la deuxième coque (30), le pilier (28) étant reçu dans le siège d'accueil (31) et solidarisé à la deuxième partie (24) par le siège d'accueil (31).

7. Enveloppe (12) selon l'une quelconque des revendications précédentes, dans laquelle l'un des premier (32) et deuxième (36) bords périphériques s'étend autour de l'autre des premier (32) et deuxième (36) bords périphériques en une région de recouvrement (43).

8. Enveloppe (12) selon l'une quelconque des revendications précédentes, dans lequel l'une des première (22) et deuxième (24) parties est formée en un matériau configuré pour être transparent à un rayonnement laser, l'autre de la première (22) et deuxième (24) parties étant formée en un matériau configuré pour absorber le rayonnement laser, le premier bord périphérique (32) et le deuxième bord périphérique (36) et/ou le pilier (28) et la deuxième partie (24) étant solidarisés entre eux par soudage laser.

9. Enveloppe (12) selon l'une quelconque des revendications 1 à 7, dans lequel le premier bord périphérique (32) et le deuxième bord périphérique (36) et/ou le pilier (28) et la deuxième partie (24) sont solidarisés entre eux par soudage bord à bord, une feuille résistive (64) étant disposée entre des bords adjacents (66) soudés du premier bord périphérique (32) et du deuxième bord périphérique (36) et/ou du pilier (28) et de la deuxième partie (24).

10. Enveloppe (12) selon la revendication 9, dans laquelle les bords adjacents (66) soudés délimitent entre eux un plan de soudage bord à bord (S) oblique, s'étendant obliquement relativement à une direction d'épaisseur (E) du premier bord périphérique (32) et du deuxième bord périphérique (36) et/ou du pilier (28) et de la deuxième partie (24) soudés.

11. Enveloppe (12) selon l'une quelconque des revendications précédentes, dans laquelle la deuxième partie (24) comprend au moins un pilier (28) traversant le volume intérieur (41), venu de matière avec la deuxième coque (30) et étant allongé entre une extrémité proximale (46), connectée à la deuxième coque (30), et une extrémité distale (47), solidarisée à la première partie (22), une section transversale du pilier (28) étant décroissante de son extrémité proximale (46) à son extrémité distale (47).

12. Enveloppe selon la revendication 11, dans laquelle la première (22) et la deuxième (24) parties sont sensiblement de même forme.

13. Réservoir de gaz pressurisé (10) comprenant une enveloppe (12) selon l'une quelconque des revendications 1 à 12, et un corps de réservoir (14) disposé autour de l'enveloppe (12), une face interne (18) du corps de réservoir (14) étant apposée à une face externe (20) de l'enveloppe (12).

14. Procédé de fabrication d'une enveloppe de contention d'un gaz pressurisé (12) selon l'une quelconque des revendications 1 à 12, comprenant les étapes suivantes :
- fourniture d'une première partie (22) et d'une deuxième partie (24) de l'enveloppe (12) ;
- solidarisation du premier bord périphérique (32) au deuxième bord périphérique (36) et solidarisation du pilier (28) de la première partie (22) à la deuxième partie (24).
